# EUROPEAN PATENT SPECIFICATION

(11) **EP 3 068 731 B1**
(45) Date of publication and mention of the grant of the patent: **10.01.2018**
(21) Application number: 14795650.2
(22) Date of filing: 10.11.2014
(51) Int. Cl.: C02F 1/42, C02F 1/72, C02F 101/38, C02F 103/04

(54) **A PROCESS FOR REMOVING UREA FROM WATER**
VERFAHREN ZUR ENTFERNUNG VON HARNSTOFF AUS WASSER
PROCÉDÉ D'ÉLIMINATION DE L'URÉE CONTENUE DANS L'EAU

(30) Priority: 11.11.2013 US 201361902576 P
(43) Date of publication of application: 21.09.2016
(73) Proprietor: Rychen, Philippe, 68640 Muespach-le-Haut (FR); Scheiffelen, Beate, 71287 Weissach (DE); Frank, Tamara, 70437 Stuttgart (DE)
(72) Inventor: Rychen, Philippe, 68640 Muespach-le-Haut (FR); Scheiffelen, Beate, 71287 Weissach (DE); Frank, Tamara, 70437 Stuttgart (DE)
(74) Representative: Parker, Andrew James
(86) International application number: PCT/EP2014/074187
(87) International publication number: WO 2015/067805

(56) References cited:
- JP-A- 2008 173 617
- US-A- 4 188 292
- US-A1- 2013 292 330

## Description

### BACKGROUND

Urea (CO(NH₂)₂) is a very small molecule, very polar and highly dissolved in water. This makes it difficult to be removed at low concentrations (up to 1000 ppb, parts per billion). In most natural waters (well, drinking, and surface) and in recycled wastewater (municipal industrial and agricultural water), urea can be present, depending especially on seasonal agricultural run off, in the range of 1-100 ppb.

For ultrapure water (UPW) production, especially for use in the manufacture of semiconductor wafers, urea is a very critical contaminant, for during semiconductor device production the urea hydrolyses on the surface, producing mainly prohibited ammonia, an ionic compound.

The amount of reduction of urea in conventional UPW processes is very low and not sufficient to bring the urea down to acceptable levels. Bio-filters can somewhat handle urea, but it is very difficult to control how the bio-filters will work at these low urea concentration levels. Chemical processes, like oxidation with Chlorine, Bromine followed by adsorption, reverse osmosis, and so on, are well known for reducing urea, but expensive in capital and operating costs.

It is also known to reduce urea levels with a nitrite ion (NO₂-), as a salt like NaNO₂ (sodium nitrite), Nitrous acid (HNO₂) or NO₂ gas, but at these low concentrations, for the urea is too dispersed to produce sufficient reactions to convert the urea to more easily removable elements or compounds.

Currently, UPW processes include the steps of multimedia filtration, activated carbon filtration, cation exchange resin columns, degassing, anion exchange resin columns, and then reverse osmosis which constitutes a standard pre- treatment process group of a total UPW process. In particular JP2008173617 and US2013/292330 describe methods for removing urea from water so as to produce ultra pure water. US41882892 describes a method to remove urea from water by adding nitrite ions.

### SUMMARY

The process of this disclosure overcomes partly or totally the drawbacks of existing processes by removing 85-95% of the low concentration urea in each process step of this disclosure.

More particularly, it has been discovered that in a conventional process, the feed water to the cation exchange vessels containing urea in trace levels (1-1,000 ppb) will adsorb very slightly on strong acid ion exchange resins. This is due to the fact that urea is a very weak base molecule (pKb=1 .5 E-14) and the functional groups of the resins (R-SO₃-H+) have a pKa of approximately 0.7. Resins with higher DVB (Divinylbenzene) show slightly higher adsorption capacities. At these trace levels, the adsorption capacity is in the range of 5-20% of the total resin capacity for a water containing 5 meq/L cations (Ca, Mg, Na, K, NH₄). With this increased concentration of the urea on the resin it has been discovered that a nitrite ion (NO₂), as a salt like NaNO₂ (sodium nitrite), Nitrous acid (HNO₂) or NO₂ gas, can now react with and oxidize the urea, and convert it to more easily removable elements or compounds.

In summary, the process of this disclosure adds to a UPW process the step of using a strong acid ion exchange resin, a preceding step of adding a nitrite to the feed water of an existing cation exchange resin unit, the nitrite being added by a dosing unit for NO₂, HNO₂, or NO₂. More particularly, the process of this disclosure is a process as described in claim 1. It is a process for removing urea in concentrations of less than 1000 parts per billion from a feed, the process comprising the steps of dosing the feed with a nitrite ion and then passing the dosed feed through a strong cation exchange resin in an exchange column. Preferred embodiments are described in the dependent claims 2-8.

### DETAILED DESCRIPTION

More particularly, the improved process according to a preferred embodiment includes one, or two cation exchange columns in series, each filled with strong acidic cation exchange resin type R-SO₃-H+ (Polystyrene cross linked with DVB). The ion exchange resins are loaded with cations from raw water (Calcium, Magnesium, sodium, Potassium, Ammonium, etc.) and replaced with hydronium (H+).

The process of this disclosure adds nitrite ion (NO₂-), as a salt like NaNO₂ (sodium nitrite), Nitrous acid (HNO₂) or NO₂ gas, through a dosing device, to the feed water in front of the cation exchange vessel or vessels, or in front of each vessel. The molar ratio of NO₂ to urea should be between 50 and 1500, ideally between 100 and 700. The reaction that then takes place on the strong cation exchange resin is:

CO(NH₂)₂ + HNO₂ + H⁺ → N₂ + CO₂ + NH₄⁺ +H₂O

The produced ammonium (NH₄⁺) during reaction on the resin bead is trapped on the ion exchange resin. The produced gases CO₂ and N₂ are dissolved in water under pressure and released during depressurizing the water. The combination of the nitrite ion together with the strong acidic cation exchange resin is hereafter referred to as the process column.

The kinetics of the reaction can be increased by increasing the temperature of the feed water up to 30-60°C. A heat recovery system can also be added to the outlet water to enhance the system efficiency, and to lower the water temperature from 40-50°C to 20-25°C. Heating the feed water also reduces the resin contact time, so a smaller resin vessel can be used.

The excess NO₂ fed into the process will be trapped in a following anion exchange resin vessel, one that is normally present downstream in a UPW- Pre-treatment process chain. If an anion exchange resin vessel is not present, the excess NO₂ can also be removed by a downstream reverse osmosis process (RO). On the wastewater side, remaining NO₂ ions can be destroyed with sodium hypochlorite (bleach) or hydrogen peroxyde or anion exchange resins.

The process columns of this disclosure are equipped with a pH measurement. The ion exchange cycle and the urea oxidation reaction changes the pH of the outlet water. At increasing pH at a given set point, the process needs to be stopped and a regeneration process with acid (HCl, H₂SO₄, or HNO₃) started, followed by a water rinse. The regeneration can be co-current regeneration or preferably counter-current regeneration. The same process control can also being done by a conductivity/resistivity measurement, for the conductivity decreases and resistivity increases at breakthrough at the end of the process before regeneration.

The improved process of this disclosure needs only one strong acid action exchange resin column (CAX), but it is beneficial to have a second CAX polishing filter in series with a first CAX.

The following table illustrates an example of the results of the use of the process of this disclosure.

| Feed water: 3 meq. /L cations - 200 ppb Urea - 50 ppm NO₂ | | | |
|---|---|---|---|
| | | | |
| After first column | | | After second column |
| | | | |
| 20-50 ppb Urea | | | < 5 ppb urea |
| | | | |
| pH= 3 | conductivity 800 microS/cm | | pH= 3 |
| | | | |
| at breakthrough | | | |
| | | | |
| 80 ppb urea | | | < 5 ppb urea |
| | | | |
| pH=5 | conductivity 400 microS/cm | | pH= 3 |

### BENEFITS

Each process column of this disclosure is able to have a urea removal efficiency of 85-95% over a complete ion exchange cycle. When two process columns are placed in series, the first process column acts as a working filter and the second process column acts as a polishing filter, benefiting from the remaining excess NO₂ present in the water.

## Claims

1. A process for removing urea in concentrations of less than 1000 parts per billion from feed water, the process comprising the step of: providing the feed water to one or more ion exchange columns in series filled up with strong acid cation exchange resins and an addition of a nitrite ion (NO₂-) by adding at least one of a salt like NaNO₂, Nitrous acid (HNO₂) or NO₂ gas in front of the ion exchange resin columns.

2. A process in accordance with Claim 1 wherein the ion exchange resins are loaded with cations from raw water and replaced with hydronium during regeneration.

3. A process in accordance with Claim 1 wherein the ammonium ions which are partially produced by the reaction of urea with the nitrite ion are at same time removed by the resin during saturation and replaced with hydronium during regeneration.

4. A process in accordance with Claim 1 wherein the process includes the step of controlling the process by one of either electrical conductivity or pH to trigger a regeneration of the resin phase with acidic solutions.

5. A process in accordance with Claim 1 wherein the excess of nitrite ion present in the water added in front of the ion exchange columns is removed by one of a following anion exchange resin or reaction with hypochlorite solutions or hydrogen peroxide or other oxidant or a downstream reverse osmosis process.

6. A process according to claim 1, and further including the step of heating the dosed feed up to at least about 30°C.

7. A process according to claim 1 wherein the dosed molar ratio of NO₂ to urea is between 50 and 1500.

8. A process according to claim 8 wherein the dosed molar ratio of NO₂ to urea is between 100 and 700.

## Patentansprüche

1. Verfahren zur Entfernung von Harnstoff in Konzentrationen von weniger als 1000 Teilen pro Milliarde aus Speisewasser, wobei das Verfahren den folgenden Schritt umfasst: Bereitstellen des Speisewassers für eine oder mehrere in Reihe geschaltete Ionenaustauschsäulen, die mit stark sauren Katonenaustauschharzen gefüllt sind, und eine Zugabe von einem Nitrition (NO₂⁻) durch Zugabe von mindestens einem von einem Salz wie NaNO₂, salpetriger Säure (HNO₂) oder NO₂-Gas vor den Ionenaustauschharz-Säulen.

2. Verfahren nach Anspruch 1, wobei die Ionenaustauschharze mit Kationen aus Rohwasser beladen und während der Regeneration durch Hydronium ersetzt werden.

3. Verfahren nach Anspruch 1, wobei die Ammoniumionen, die teilweise durch die Reaktion von Harnstoff mit dem Nitrition erzeugt werden, gleichzeitig durch das Harz während der Sättigung entfernt und während der Regeneration durch Hydronium ersetzt werden.

4. Verfahren nach Anspruch 1, wobei das Verfahren den Schritt der Steuerung des Verfahrens entweder durch elektrische Leitfähigkeit oder durch pH beinhaltet, um eine Regeneration der Harzphase mit sauren Lösungen einzuleiten.

5. Verfahren nach Anspruch 1, wobei der Überschuss an Nitrition, der in dem vor den Ionenaustauschsäulen zugesetzten Wasser vorhanden ist, durch eines von einem folgenden Anionenaustauschharz oder Reaktion mit Hypochloritlösungen oder Wasserstoffperoxid oder einem anderen Oxidationsmittel oder einem nachgeschalteten Umkehrosmose-Verfahren entfernt wird.

6. Verfahren nach Anspruch 1, ferner umfassend den Schritt des Erwärmens der dosierten Beschickung bis auf mindestens etwa 30 °C.

7. Verfahren nach Anspruch 1, wobei das dosierte Molverhältnis von NO₂ zu Harnstoff zwischen 50 und 1500 liegt.

8. Verfahren nach Anspruch 8, wobei das dosierte Molverhältnis von NO₂ zu Harnstoff zwischen 100 und 700 liegt.

## Revendications

1. Procédé pour éliminer l'urée, à des concentrations inférieures à 1000 parties par milliard, de l'eau d'alimentation, le procédé comprenant l'étape consistant : à fournir l'eau d'alimentation à une ou plusieurs colonnes échangeuses d'ions en série remplies de résines échangeuses de cations fortement acides et à ajouter un ion nitrite (NO₂-) en ajoutant au moins l'un parmi un sel tel que NaNO₂, l'acide nitreux (HNO₂) et le gaz NO₂ devant les colonnes de résines échangeuses d'ions.

2. Procédé selon la revendication 1, dans lequel les résines échangeuses d'ions sont chargées de cations provenant de l'eau brute et remplacées par l'hydronium pendant la régénération.

3. Procédé selon la revendication 1, dans lequel les ions ammonium qui sont partiellement produits par la réaction de l'urée avec l'ion nitrite sont en même temps éliminés par la résine pendant la saturation et remplacés par l'hydronium pendant la régénération.

4. Procédé selon la revendication 1, dans lequel le procédé comporte l'étape consistant à commander le procédé par l'un(e) parmi la conductivité électrique et le pH pour déclencher une régénération de la phase résine avec des solutions acides.

5. Procédé selon la revendication 1, dans lequel l'excès d'ion nitrite présent dans l'eau ajouté devant les colonnes échangeuses d'ions est éliminé par une résine échangeuse d'anions suivante ou par réaction avec des solutions d'hypochlorite ou du peroxyde d'hydrogène ou un autre oxydant ou par un procédé d'osmose inverse en aval.

6. Procédé selon la revendication 1, et comportant en outre l'étape consistant à chauffer l'alimentation dosée jusqu'à au moins environ 30°C.

7. Procédé selon la revendication 1, dans lequel le rapport molaire de dosage du NO₂ sur l'urée est compris entre 50 et 1500.

8. Procédé selon la revendication 8, dans lequel le rapport molaire de dosage du NO₂ sur l'urée est compris entre 100 et 700.
